# EUROPÄISCHE PATENTSCHRIFT

(11) **EP 1 348 736 B1**
(45) Veröffentlichungstag und Bekanntmachung des Hinweises auf die Patenterteilung: **28.06.2006**
(21) Anmeldenummer: 03002102.6
(22) Anmeldetag: 30.01.2003
(51) Int. Cl.: C08L 83/07, C08K 3/00, C08K 3/34, C08K 5/17, C08K 5/544

(54) **Siliconmassen mit verbesserter Hitzestabilität**
Silicone compositions having improved heat stability
Compositions de silicone ayant une stabilité thermique améliorée

(30) Priorität: 28.03.2002 DE 10214137
(43) Veröffentlichungstag der Anmeldung: 01.10.2003
(73) Patentinhaber: Wacker Chemie AG, 81737 München (DE)
(72) Erfinder: Wörner, Christof, Dr., 84489 Burghausen (DE); Birneder, Richard, 84359 Simbach / Inn (DE)
(74) Vertreter: Fritz, Helmut

(56) Entgegenhaltungen:
- EP-A- 0 653 463
- EP-A- 0 801 103

## Beschreibung

Die Erfindung betrifft zu Elastomeren vernetzbare Siliconmassen, die inaktive Füllstoffe und Stickstoffverbindungen enthalten und die daraus erhältlichen Siliconelastomere.

Bekanntermaßen kann durch Zusatz von, wie z.B. Quarz oder Talkum, die Ölbeständigkeit von Siliconelastomeren verbessert werden.
US-A-4131588 beschreibt Glimmer- und optional Talkum-haltige additions- bzw. kondensationsvernetzende Siliconmassen mit reduzierter Gasdurchlässigkeit.
EP-A-953675 beschreibt die Verwendung von Talkum als Füllstoff in Textilbeschichtungsmassen. Die kondensation- bzw. additionsvernetzten Siliconelastomere weisen aufgrund des Talkums eine geringere Reibung auf. Eingesetzt werden diese Massen vor allen Dingen bei der Airbagbeschichtung.

Es wurde gefunden, dass Talkum und andere nicht-verstärkende Füllstoffe einen starken Gewichtsverlust in Siliconmassen bzw. Siliconelastomeren bei Temperaturen oberhalb 100°C verursachen. Es wurde festgestellt, dass z.B Talkum und Quarz bei höheren Temperaturen die Siloxankette spalten und somit die Bildung von cylischen, flüchtigen Siloxanzyklen katalysiert. Dies führt dazu, dass die Hitzestabilität dieser Siliconmassen bzw. Siliconelastomeren bei Temperaturen oberhalb von 100°C unbefriedigend ist.

Es bestand die Aufgabe, mit nicht-verstärkenden Füllstoffen gefüllte Siliconmassen bzw. Siliconelastomere mit verbesserter Hitzestabilität bereitzustellen.

Gegenstand der Erfindung sind zu Elastomeren vernetzbare Siliconmassen, welche die Bestandteile
(A) 20 bis 99 Gew.-% mindestens zwei Alkenylgruppen pro Molekül enthaltendes Polyorganosiloxan mit einer Viskosität bei 25°C von 0,1 bis 500 000 Pa·s,
(B) 1 bis 80 Gew.-% Talkum als nicht-verstärkenden Füllstoff mit einer mittleren Teilchengröße von 0,1 bis 200 µm und einer spezifischen Oberfläche von <100 m²/g,
(C) Vernetzungskomponente die ausgewählt wird aus
   (C1) organischem Peroxid und
   (C2)mindestens zwei SiH-Funktionen pro Molekül enthaltender Organosiliciumverbindung in Kombination mit Hydrosilylierungskatalysator und
(D) Stickstoffverbindung, die ausgewählt wird aus Amino-, Ammonium-, Amidoverbindungen und stickstoffhaltigen Organosiliciumverbindungen, enthalten.

Die Erfindung beruht darauf, dass durch Zusatz von Amino- bzw. Ammoniumverbindungen von zu Elastomeren vernetzbaren Siliconmassen die Cyclenbildung und damit der Gewichtsverlust bei höheren Temperaturen drastisch reduziert wird und somit stabilere mechanische Eigenschaften bei Hitzeeinwirkung realisiert werden können.

Die Zusammensetzung des Alkenylgruppen enthaltenden Polyorganosiloxans (A) entspricht vorzugsweise der durchschnittlichen allgemeinen Formel (1)

R¹ₓR²_{y}SiO_{(4-x-y)/2} (1),

in der
- **R**^{**1**}: einen einwertigen, gegebenenfalls halogen- oder cyanosubstituierten, gegebenenfalls über eine organische zweiwertige Gruppe an Silicium gebundenen C₁-C₁₀₋Kohlenwasserstoffrest, der aliphatische Kohlenstoff-Kohlenstoff Mehrfachbindungen enthält,
- **R**^{**2**}: einen einwertigen, gegebenenfalls halogen- oder cyanosubstituierten, über SiC-gebundenen C₁-C₁₀₋Kohlenwasserstoffrest, der frei ist von aliphatischen Kohlenstoff-Kohlenstoff Mehrfachbindungen
- **x**: eine solche nichtnegative Zahl, daß mindestens zwei Reste **R**^{**1**} in jedem Molekül vorhanden sind, und
- **y**: eine nicht negative Zahl, so daß **(x+y)** im Bereich von 1,8 bis 2,5 liegt, bedeuten.

Die Alkenylgruppen **R**^{**1**} sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen **R**^{**1**} an Silicium der Polymerkette gebunden sein können, bestehen beispielsweise aus Oxyalkyleneinheiten, wie solche der allgemeinen Formel (2)

-(O)ₘ[(CH₂)ₙO]ₒ- (2),

in der
- **m**: die Werte 0 oder 1, insbesondere 0,
- **n**: Werte von 1 bis 4, insbesondere 1 oder 2 und
- **o**: Werte von 1 bis 20, insbesondere von 1 bis 5 bedeuten.

Die Oxyalkyleneinheiten der allgemeinen Formel (10) sind links an ein Siliciumatom gebunden.

Die Reste **R**^{**1**} können in jeder Position der Polymerkette, insbesondere an den endständigen Siliciumatomen, gebunden sein.

Beispiele für unsubstituierte Reste **R**^{**2**} sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Alkenylreste, wie der Vinyl-, Allyl-, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthylrest; Alkarylreste, wie o-, m-, p-Tolylreste und Ethylphenylreste; Aralkylreste, wie der Benzylrest, der alpha- und der β-Phenylethylrest.

Beispiele für substituierte Kohlenwasserstoffreste als Reste **R**^{**2**} sind halogenierte Kohlenwasserstoffe, wie der Chlormethyl-, 3-Chlorpropyl-, 3-Brompropyl, 3,3,3-Trifluorpropyl und 5,5,5,4,4,3,3-Hexafluorpentylrest sowie der Chlorphenyl-, Dichlorphenyl- und Trifluortolylrest.

**R**^{**2**} weist vorzugsweise 1 bis 6 Kohlenstoffatome auf. Insbesondere bevorzugt sind Methyl und Phenyl.

Bestandteil (A) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane (A) kann linear, cyclisch oder auch verzweigt sein. Der Gehalt an zu verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%.

Besonders bevorzugt ist die Verwendung Vinylgruppen enthaltender Polydimethylsiloxane, deren Moleküle der allgemeinen Formel (3)

(ViMe₂SiO_{1/2})₂(ViMeSiO)ₚ(Me₂SiO)_{q} (3),

entsprechen, wobei die nichtnegativen ganzen Zahlen **p** und **q** folgende Relationen erfüllen: **p**≥0, 50<**(p+q)**<20000, vorzugsweise 200<**(p+q)**<1000, und 0<(**p**+1)/**(p+q)**<0.2.

Die Viskosität des Polyorganosiloxans (A) beträgt bei 25°C vorzugsweise 0,5 bis 100000 Pa·s, insbesondere 1 bis 2000 Pa·s.

Die Siliconmassen enthalten vorzugsweise 30 bis 80 Gew.-%, insbesondere 35 bis 75 Gew.-% Polyorganosiloxan (A).

Der nicht-verstärkende Füllstoff Talkum hat im Vergleich zu anderen inaktiven mineralischen Füllstoffen, wie z.B. Quarz, den Vorteil, dass nicht-abrasive, ölbeständige vernetzbare Siliconmassen generiert werden können. Quarz-haltige Siliconmassen haben den Nachteil, dass diese aufgrund der hohen Abrasivität des Quarzmehls nur an Maschinen und Werkzeugen mit speziell gehärtetem Stahl verarbeitet werden können. Talkum-haltige, ölbeständige Siliconmassen können problemlos an Standard-Spritzgussmaschinen bzw. -Werkzeugen verarbeitet werden.

Der Füllstoff (B) kann auch oberflächenbehandelt sein, z.B. mit Silylierungsmittel.

Vorzugsweise beträgt die mittlere Teilchengröße des Füllstoffs (B) 0,5 bis 100 µm, insbesondere 1 bis 50 µm. Vorzugsweise beträgt die spezifische Oberfläche des Füllstoffs (B) <70 m²/g, besonders bevorzugt <50 m²/g.

Die Siliconmassen enthalten vorzugsweise 2 bis 60 Gew.-%, insbesondere 5 bis 50 Gew.-% Füllstoff (B).

Die Siliconmassen können als Vernetzungskomponente (C) organisches Peroxid (C1) enthalten. Durch organisches Peroxid (C1) die als Quelle für freie Radikale dienen, werden die Siliconmassen mittels freier Radikale vernetzt.

Beispiele für organische Peroxide (C1) sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, tert.-Butylperoxy-isopropylcarbonat, Tert.-butylperoxyisononanoat, Dicyclohexylperoxydicarbonat und 2,5-Dimethylhexan-2,5-diperbenzoat, tert.-Butyl-β-hydroxyethylperoxid. Auch eine Kombination von organischen Peroxiden (C1) kann eingesetzt werden, wie Bis-4-Methylbenzoylperoxid und eine einzige Verbindung oder mindestens zwei der Verbindungen aus der Gruppe, die aus Benzoylperoxid, Dicumylperoxid, 2,5-Dimethylhexan-2,5-di-perbenzoat, Ditertiär-butylperoxid besteht.

Die Siliconmassen enthalten vorzugsweise 0,05 bis 10 Gew.-%, insbesondere 0,1 bis 2 Gew.-% organisches Peroxid (C1).

Die mindestens zwei SiH-Funktionen pro Molekül enthaltende Organosiliciumverbindung (C2), besitzt vorzugsweise eine Zusammensetzung der durchschnittlichen allgemeinen Formel (4)

HₐR³_{b}SiO_{(4-a-b)}/2 (4),

in der
- **R**^{**3**}: einen einwertigen, gegebenenfalls halogen- oder cyanosubstituierten, über SiC-gebundenen C₁-C₁₈₋Kohlenwasserstoffrest, der frei ist von aliphatischen Kohlenstoff-Kohlenstoff Mehrfachbindungen und
- **a** und **b**: nichtnegative ganze Zahlen sind,
mit der Maßgabe, dass 0.5<**(a+b)**<3,0 und 0<**a**<2, und dass mindestens zwei siliciumgebundene Wasserstoffatome pro Molekül vorhanden sind.

Beispiele für **R**^{**3**} sind die für **R**^{**2**} angegebenen Reste. **R**^{**3**} weist vorzugsweise 1 bis 6 Kohlenstoffatome auf. Insbesondere bevorzugt sind Methyl und Phenyl.

Bevorzugt ist die Verwendung einer drei oder mehr SiH-Bindungen pro Molekül enthaltenden Organosiliciumverbindung (C2). Bei Verwendung einer nur zwei SiH-Bindungen pro Molekül aufweisenden Organosiliciumverbindung (C2) empfiehlt sich die Verwendung eines Polyorganosiloxans (A), das über mindestens drei Alkenylgruppen pro Molekül verfügt.

Der Wasserstoffgehalt der Organosiliciumverbindung (C2), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die Organosiliciumverbindung (C2) enthält vorzugsweise mindestens drei und höchstens 600 Siliciumatome pro Molekül. Bevorzugt ist die Verwendung von Organosiliciumverbindung (C2), die 4 bis 200 Siliciumatome pro Molekül enthält.

Die Struktur der Organosiliciumverbindung (C2) kann linear, verzweigt, cyclisch oder netzwerkartig sein.

Besonders bevorzugte Organosiliciumverbindungen (C2) sind lineare Polyorganosiloxane der allgemeinen Formel (5)

(HR⁴₂SiO_{1/2})_{c}(R⁴₃SiO_{1/2})_{d}(HR⁴SiO_{2/2})ₑ(R⁴₂SiO_{2/2})_{f} (5),

wobei
**R**^{**4**} die Bedeutungen von **R**^{**3**} hat und
die nichtnegativen ganzen Zahlen **c, d, e** und **f** folgende Relationen erfüllen: (**c+d**)=2, (**c+e**)>2, 5<(**e+f**)<200 und 1<**e**/(**e +f**)<0,1.

Die SiH-funktionelle Organosiliciumverbindung (C2) ist vorzugsweise in einer solchen Menge in der vernetzbaren Siliconmasse enthalten, dass das Molverhältnis von SiH-Gruppen zu Alkenylgruppen bei 0,5 bis 5, insbesondere bei 1,0 bis 3,0 liegt.

Als Hydrosilylierungskatalysator (C2) können alle bekannten Katalysatoren eingesetzt werden, welche die bei der Vernetzung von additionsvernetzenden Siliconmassen ablaufenden Hydrosilylierungsreaktionen katalysieren. Als Hydrosilylierungskatalysatoren (C2) können insbesondere Metalle und deren Verbindungen, wie Platin, Rhodium, Palladium, Ruthenium und Iridium, vorzugsweise Platin, eingesetzt werden. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂.Olefin)₂ und H(PtCl₃.Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan. Ebenfalls sehr geeignet sind die in EP-A-1077226 und EP-A-994159 beschriebenen Platinverbindungen.

Hydrosilylierungskatalysator (C2) kann in jeder beliebigen Form eingesetzt werden, beispielsweise auch in Form von Hydrosilylierungskatalysator enthaltenden Mikrokapseln, oder Organopolysiloxanpartikeln, wie beschrieben in EP-A-1006147.

Der Gehalt an Hydrosilylierungskatalysatoren (C2) wird so gewählt, dass die additionsvernetzbare Siliconmasse einen Pt-Gehalt von 0,1-200 ppm, bevorzugt von 0,5-40 ppm besitzt.

Die Amino- oder Ammoniumverbindung (D) können beliebige Strukturen aufweisen. Geeignet sind beispielsweise Aminoverbindungen (D) der allgemeinen Formel (6) und Ammoniumverbindungen (D) der allgemeinen Formel (7)

NR⁵R⁶R⁷ (6),

[NR⁵R⁶R⁷ R⁸]⁺ X⁻ (7),

in denen
- **R**^{**5**}**, R**^{**6**}**, R**^{**7**}**, R**^{**8**}: Wasserstoffatom, Hydroxylgruppe, einwertigen, gegebenenfalls halogen- oder cyanosubstituierten, C₁-C₂₅₋Kohlenwasserstoffrest, in dem nicht benachbarte Methylgruppen durch Gruppen -NR⁹₂, Methylengruppen durch Gruppen -O- oder -NR⁹- und Methingruppen durch Gruppen -N= ersetzt sein können, wobei 2 oder 3 der Reste R⁵, R⁶, R⁷ zusammen einen aliphatischen oder aromatischen Cyclus oder Mehrfachzyklus bilden können,
- **R**^{**9**}: Wasserstoffatom, Hydroxylgruppe, einwertigen, gegebenenfalls halogen- oder cyanosubstituierten, C₁-C₁₀₋Kohlenwasserstoffrest bedeuten und
- **X**^{**-**}: ausgewählt wird aus einem OH-, Halogen-und Säureanion.

Die Kohlenwasserstoffrestreste **R**^{**5**}**, R**^{**6**}**, R**^{**7**}**, R**^{**8**} weisen vorzugsweise höchstens 15 Kohlenstoffatome auf.

Die Kohlenwasserstoffrestreste **R**^{**9**} sind insbesondere aliphatisch. Sie weisen vorzugsweise höchstens 6 Kohlenwasserstoffatome auf.

Beispiele für Stickstoffverbindungen (D), in denen in **R**^{**5**}**, R**^{**6**}**, R**^{**7**}**, R**^{**8**} nicht benachbarte Methylgruppen durch Gruppen -NR⁹₂, Methylengruppen durch Gruppen -NR⁹- und Methingruppen durch Gruppen -N= ersetzt sind, sind CH₃CH₂CH₂NHCH₂CH₂NH₂ und CH₃CH₂CH₂N(CH₂CH₂NHCH₃)₂.

Beispiele dafür, dass 2 oder 3 der Reste **R**^{**5**}**, R**^{**6**}**, R**^{**7**} zusammen einen aliphatischen oder aromatischen Cyclus oder Mehrfachzyklus bilden können sind Heterocyclen wie z.B. Morpholin, Pyrimidin, Pyridin, und Pyrrol und deren Derivate.

Beispiele für Säureanionen **X** sind CO₃²⁻, CH₃CH₂COO⁻.

Stickstoffhaltige Organosiliciumverbindungen (D) können beispielsweise sein Silane, Siloxane, Silazane.

Die stickstoffhaltigen (D) Silane und Siloxane weisen vorzugsweise Si-C gebundene Reste der allgemeinen Formel (8)

R⁵R⁶N-R¹⁰- (8),

auf, in der
- **R**^{**5**}, **R**^{**6**}: die vorstehenden Bedeutungen aufweisen und
- **R**^{**10**}: einen zweiwertigen C₁-C₁₅-Kohlenwasserstoffrest, insbesondere Alkylenrest, bevorzugt mit 1 bis 6 Kohlenstoffatomen aufweist.

Die Struktur der Polyorganosiloxane (D) kann linear, cyclisch oder verzweigt sein.

Beispiele für Silane (D) sind H₂N-(CH₂)₃-Si(OR)₃ und H₂N-(CH₂)₂-NH-(CH₂)₃-Si(OR)₃.
Beispiele für Siloxane (D) sind H₂N-(CH₂)₃-Si(CH₃)₂[-O-Si(CH₃)₂]z-(CH₂)₃-NH₂ und H₂N-(CH₂)₂-NH-(CH₂)₃-Si(CH₃)₂[-O-Si(CH₃)₂]z-(CH₂)₃-NH-(CH₂)₂-NH₂, wobei **z** Werte von 1 bis 1000 aufweisen kann. Die Aminogruppen können aber auch seitenständig und/oder endständig gebunden sein.

Beispiel für Silazane, sind Hexamethyldisilazan und Divinyltetramethyldisilazan und deren Derivate.

Ein Beispiel für eine Amidoverbindung (D) ist Bis-(trimethylsilyl)-acetamid CH₃C[=N-Si(CH₃)₃]OSi(CH₃)₃ und dessen Derivate.

Die Stickstoffverbindungen (D) können erst bei Lagerung oder während der Vernetzung oder erst während der nachträglichen Temperung der vernetzten Siliconelastomere Aminoverbindungen freisetzen.

Bevorzugt werden schwerflüchtige basische Aminoverbindungen mit einem Siedepunkt oberhalb 100°C, besonders bevorzugt oberhalb von 150°C.

Bevorzugt werden die oben beschriebenen aminoalkylfunktionalisierten Siloxane und Silane.

Der N-Gehalt, der über die Stickstoffverbindungen (D) in die Siliconmassen eingebracht wird, liegt bei 10 - 10.000 ppm, bevorzugt 15-1.000 ppm, besonders bevorzugt bei 15- 500 ppm, jeweils bezogen auf die Summe der Bestandteile (A) und (B).

Die mechanische Festigkeit des vulkanisierten Siliconkautschuks ist erhöht, wenn die Siliconmassen aktiv verstärkende Füllstoffe als Bestandteil (E) enthalten. Als aktiv verstärkende Füllstoffe (E) werden vor allem gefällte und insbesondere pyrogene Kieselsäuren, sowie Gemische derselben verwendet. Die spezifische Oberfläche dieser aktiv verstärkenden Füllstoffe sollte mindestens 50 m²/g betragen oder vorzugsweise im Bereich von 200 bis 400 m²/g gemäß der Bestimmung nach der BET-Methode liegen. Derartige aktiv verstärkende Füllstoffe sind auf dem Gebiet der Siliconkautschuke sehr gut bekannte Materialien.
Der Gehalt der additionsvernetzbaren Siliconmassen an aktiv verstärkendem Füllstoff (E) liegt vorzugsweise im Bereich von 5 bis 60 Gew.-%, insbesondere bei 10 bis 40 Gew.-%.

Die vernetzbaren Siliconmassen können wahlweise als Bestandteil (F) weitere Zusätze zu einem Anteil von bis zu 70 Gew.-%, vorzugsweise 0,0001 bis 40 Gew.-%, enthalten. Diese Zusätze können z.B. harzartige Polyorganosiloxane, die von den Diorganopolysiloxanen (A) und (C2) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Farbstoffe, Pigmente usw. Desweiteren können als Bestandteil (F) thixotropierende Bestandteile, wie hochdisperse Kieselsäure oder andere handelsübliche Thixotropieadditive enthalten sein. Zusätzlich können auch als Kettenverlängerer Siloxane der Formel HSi(CH₃)₂-[O-Si(CH₃)₂]_{w}-H vorhanden sein, wobei **w** Werte von 1 bis 1000 bedeutet.
Enthalten sein können des weiteren Zusätze (F), die der gezielten Einstellung der Verarbeitungszeit, Anspringtemperatur und Vernetzungsgeschwindigkeit der vernetzenden Massen dienen. Diese Inhibitoren und Stabilisatoren sind auf dem Gebiet der vernetzenden Massen sehr gut bekannt.
Zusätzlich können auch Additive hinzugefügt werden, die den Druckverformungsrest verbessern. Zusätzlich können auch Hohlkörper hinzugefügt werden. Zusätzlich können auch Treibmittel zur Erzeugung von Schäumen hinzugefügt werden. Zusätzlich können auch nicht vinylfunktionalisierte Polydiorganosiloxane hinzugefügt werden.

Die Compoundierung der vernetzbaren Siliconmassen erfolgt durch Mischen der oben aufgeführten Komponenten in beliebiger Reihenfolge. Die Vernetzung der vernetzbaren Siliconmassen erfolgt vorzugsweise durch Erwärmen, vorzugsweise bei 30 bis 250°C, bevorzugt bei mindestens 50°C, insbesondere bei mindestens 100°C, bevorzugt bei höchstens 200°C, insbesondere bei höchstens 180°C.

Gegenstand der Erfindung sind auch die Siliconelastomere, die durch Vernetzen der vernetzbaren Siliconmassen erhältlich sind.

Gegenstand der Erfindung ist auch die Verwendung von (D) Stickstoffverbindung, die ausgewählt wird aus Amino-, Ammonium-, Amido- und stickstoffhaltigen Organosiliciumverbindungen, zur Verbesserung der Hitzestabilität von Elastomeren die erhalten werden durch Vernetzen von Siliconmassen, welche die Bestandteile
(A) 20 bis 99 Gew.-% mindestens zwei Alkenylgruppen pro Molekül enthaltendes Polyorganosiloxan mit einer Viskosität bei 25°C von 0,1 bis 500 000 Pa·s,
(B) 1 bis 80 Gew.-% nicht-verstärkenden Füllstoff mit einer mittleren Teilchengröße von 0,1 bis 200 µm und einer spezifischen Oberfläche von <100 m²/g und
(C) Vernetzungskomponente die ausgewählt wird aus
   (C1) organischem Peroxid und
   (C2) mindestens zwei SiH-Funktionen pro Molekül enthaltender Organosiliciumverbindung in Kombination mit Hydrosilylierungskatalysator, enthalten.

Beispiele für den bei der erfindungsgemäßen Verwendung einsetzbaren nicht-verstärkenden Füllstoff (B) sind mineralische oder organische Füllstoffe. Beispiele für nicht-verstärkenden Füllstoffe (B) sind Quarz, z.B. als Quarzmehl, Talkum, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststofffasern, Kunststoffpulver. Bevorzugt sind Talkum und Quarz. Die Füllstoffe (B) können auch oberflächenbehandelt sein, z.B. mit Silylierungsmittel.

Alle vorstehenden Symbole der vorstehenden Formeln weisen ihre Bedeutungen jeweils unabhängig voneinander auf. In allen Formeln ist das Siliciumatom vierwertig.

In den nachfolgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele:

### Beispiel 1 (nicht erfindungsgemäß) :

550 g eines vinyldimethylsiloxy-terminierten Polydimethylsiloxans mit einer Viskosität von 20.000 mPa*s (25°C) wurden mit 0,40 g Ethinylcyclohexanol, 12,7 g eines Mischpolymerisats aus Dimethylsiloxy-, Methylhydrogensiloxy- und Trimethylsiloxy-Einheiten mit einer Viskosität von 300 mPa*s bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt. Diese additionsvernetzende Siliconmasse wurde anschließend in einer hydraulischen Presse bei einer Temperatur von 165°C innerhalb von 5 Minuten zu einer ca. 2 mm dicken Siliconelastomerfolie vernetzt.

### Beispiel 2 (nicht erfindungsgemäß) :

165 g Talkum DAB 7 (Amberger Kaolinwerke) mit einer mittleren Teilchengröße von 10 µm und einem Feuchtigkeitsgehalt von 0,3% wurden in 385 g vinyldimethylsiloxy-terminiertes Polydimethylsiloxan mit einer Viskosität von 20.000 mPa*s (25°C) eingerührt und mit 0,40 g Ethinylcyclohexanol, 12,7 g eines Mischpolymerisats aus Dimethylsiloxy-, Methylhydrogensiloxy- und Trimethylsiloxy-Einheiten mit einer Viskosität von 300 mPa*s bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt. Diese additionsvernetzende Siliconmasse wurde wie in Beispiel 1 beschrieben zu einer Siliconelastomerfolie vernetzt.

### Beispiel 3 (nicht erfindungsgemäß) :

Anstatt des in Beispiel 2 verwendeten Talkums DAB 7 wurde Talkum HB-M 15 der Fa. Chemie Mineralien GmbH mit einer mittleren Partikelgröße von 4,5 µm und einem Feuchtigkeitsgehalt von 0,1% eingesetzt.

### Beispiel 4 (nicht erfindungsgemäß) :

Anstatt des in Beispiel 2 verwendeten Talkums DAB 7 wurde Talkum HB-M 45 der Fa. Chemie Mineralien GmbH mit einer mittleren Partikelgröße von 12 µm und einem Feuchtigkeitsgehalt von 0,1% eingesetzt.

### Beispiel 5 (nicht erfindungsgemäß) :

Anstatt des in Beispiel 2 verwendeten Talkums DAB 7 wurde eine hydrophobe pyrogene Kieselsäure mit einer spezifischen Oberfläche nach BET von 300 m²/g und einem Kohlenstoffgehalt von 4,2 Gew.-% eingesetzt.

### Beispiel 6 (nicht erfindungsgemäß):

Zu 550 g eines vinyldimethylsiloxy-terminierten Polydimethylsiloxans, das eine Brabender-Plastizität von 630 daNm aufweist, wurden 1,9 g 2,5-Bis-(tert.-butylperoxo)2,5-dimethylhexan eingearbeitet und diese Mischung bei 165° innerhalb von 15 min zu einer ca. 2 mm dicken Siliconelastomerfolie vernetzt.

### Beispiel 7 (nicht erfindungsgemäß) :

165 g Talkum HB-M 45 der Fa. Chemie Mineralien GmbH mit einer mittleren Partikelgröße von 12 µm und einem Feuchtigkeitsgehalt von 0,1% und 1,9 g 2,5-Bis-(tert.-butylperoxo)2,5-dimethylhexan wurden in 385 g vinyldimethylsiloxy-terminierten Polydimethylsiloxans, das eine Brabender-Plastizität von 630 daNm aufweist, auf der Walze eingearbeitet. Die Vernetzung erfolgte bei 165° innerhalb von 15 min.

### Beispiel 8 (nicht erfindungsgemäß):

Anstatt des in Beispiel 7 verwendeten Talkums wurde eine hydrophobe pyrogene Kieselsäure mit einer spezifischen Oberfläche nach BET von 300 m²/g und einem Kohlenstoffgehalt von 4,2 Gew.-% eingesetzt.

**Tabelle 1: Einfluss von Talkum auf den Gewichtsverlust und die Zyklenbildung von Siliconelastomeren bei 200°C.**

| | Füllstoff | Gewichtsverlust der Siliconelastomere innerhalb von 24 Stunden bei 200°C [Gew.-%] | Bildung flüchtiger Siloxanzyklen innerhalb von 24 h bei 200°C [Gew.-%] |
|---|---|---|---|
| Beispiel 1 | ohne | 0,6 | <0,5 |
| Beispiel 2 | Talkum DAB 7 | 5,2 | 4,7 |
| Beispiel 3 | Talkum HB-M 15 | 4,7 | 4,3 |
| Beispiel 4 | Talkum HB-M 45 | 4,8 | 4,3 |
| Beispiel 5 | pyrogene, hydrophobe Kieselsäure | 1,2 | <0,5 |
| Beispiel 6 | ohne | 0,8 | <0,5 |
| Beispiel 7 | Talkum HB-M 45 | 5,0 | 4,3 |
| Beispiel 8 | pyrogene, hydrophobe Kieselsäure | 1,3 | <0,5 |

Aus Tabelle 1 ist ersichtlich, dass unterschiedliche Talkum-Typen bei höheren Temperaturen für die Bildung von Siloxanzyklen verantwortlich sind. Alle Beispiele sind nicht erfindungsgemäß.

### Beispiel 9:

165 g Talkum HB-M 45 wurden in 385 g vinyldimethylsiloxy-terminiertes Polydimethylsiloxan mit einer Viskosität von 20.000 mPa*s (25°C) eingerührt und mit 0,28 g Hexamethyldisilazan, 0,40 g Ethinylcyclohexanol, 12,7 g eines Mischpolymerisats aus Dimethylsiloxy-, Methylhydrogensiloxy- und Trimethylsiloxy-Einheiten mit einer Viskosität von 300 mPa*s bei 25°C und einem SiH-Gehalt von 0,48% sowie 0,48 g eines Platin-sym-Divinyltetramethyldisiloxan-Komplexes enthaltenden Lösung, die 1 Gew.-% Pt enthält, vermischt. Diese additionsvernetzende Siliconmasse wurde wie in Beispiel 1 beschrieben zu einer Siliconelastomerfolie vernetzt.

### Beispiel 10:

Der in Beispiel 4 beschriebenen Mischung wurden 0,56 g Trioctylamin hinzugefügt.

### Beispiel 11:

Der in Beispiel 4 beschriebenen Mischung wurden 0,17 g Ammoniumchlord hinzugefügt.

### Beispiel 12:

Der in Beispiel 4 beschriebenen Mischung wurden 0,56 g einer wässrigen Ammoniaklösung (25%) hinzugefügt.

### Beispiel 13:

Der in Beispiel 4 beschriebenen Mischung wurden 0,56 g Bis-(trimethylsilyl)-acetamid hinzugefügt.

### Beispiel 14:

Der in Beispiel 4 beschriebenen Mischung wurden 0,56 g Ammoniumcarbonat hinzugefügt.

### Beispiel 15:

Der in Beispiel 4 beschriebenen Mischung wurden 1,1 g aminopropyl-terminiertes Polydimethylsiloxan mit einer Viskosität von 300 mm²/s hinzugefügt.

### Beispiel 16:

Der in Beispiel 7 beschriebenen Mischung wurden 1,1 g aminopropyl-terminiertes Polydimethylsiloxan mit einer Viskosität von 300 mm²/s hinzugefügt. Und diese Mischung anschließend wie in Beispiel 6 beschrieben vernetzt.

### Beispiel 17 (nicht erfindungsgemäß) :

Der in Beispiel 4 beschriebenen Mischung wurden 0,56 g Magnesiumoxid hinzugefügt.

### Beispiel 18 (nicht erfindungsgemäß) :

Der in Beispiel 4 beschriebenen Mischung wurden 0,56 g Calciumoxid hinzugefügt.

### Beispiel 19 (nicht erfindungsgemäß):

Der in Beispiel 4 beschriebenen Mischung wurden 1,1 g Magnesiumsilikat hinzugefügt.

### Beispiel 20 (nicht erfindungsgemäß):

Der in Beispiel 4 beschriebenen Mischung wurden 1,1 g Calciumsilikat hinzugefügt.

**Tabelle 2: Einfluss verschiedener Additive auf den Gewichtsverlust und die Zyklenbildung Talkum-haltiger Siliconelastomere bei 200°C.**

| | Additiv | Gewichtsverlust der Siliconelastomere innerhalb von 24 Stunden bei 200°C [Gew.-%] | Bildung flüchtiger Siloxanzyklen innerhalb von 24 h bei 200°C [Gew.-%] |
|---|---|---|---|
| Beispiel 4 | ohne | 4,8 | 4,3 |
| Beispiel 9 | Hexamethyldisilazan | 0,7 | <0,5 |
| Beispiel 10 | Trioctylamin | 0,8 | <0,5 |
| Beispiel 11 | Ammoniumchlord | 2,3 | 1,9 |
| Beispiel 12 | Ammoniak | 1,2 | 0,8 |
| Beispiel 13 | Bis-(trimethylsilyl)-acetamid | 0,8 | <0,5 |
| Beispiel 14 | Ammoniumcarbonat | 0,9 | <0,5 |
| Beispiel 15 | Aminopropylterminiertes Polydimethylsiloxan | 0,6 | <0,5 |
| Beispiel 16 | Aminopropylterminiertes Polydimethylsiloxan | 0,8 | <0,5 |
| Beispiel 17* | Magnesiumoxid | 7,0 | 6,5 |
| Beispiel 18* | Calciumoxid | 4,8 | 4,2 |
| Beispiel 19* | Magnesiumsilikat | 4,7 | 4,5 |
| Beispiel 20* | Calciumsilikat | 4,8 | 4,5 |

| | | | |
|---|---|---|---|
| *nicht erfindungsgemäß | | | |

Aus Tabelle 2 ist ersichtlich, dass durch Zugabe verschiedener Additive zu Talkum-haltigen Siliconelastomeren die Bildung von Siloxanzyklen bei 200°C verhindert wird.

### Beispiel 21 (nicht erfindungsgemäß):

In einem Laborkneter wurden 156 g eines vinyldimethylsiloxy-terminierten Polydimethylsiloxans mit einer Viskosität von 20.000 mPa*s (25°C) vorgelegt, auf 150°C aufgeheizt und mit 110 g einer hydrophoben pyrogenen Kieselsäure mit einer spezifischen Oberfläche nach BET von 300 m²/g und einem Kohlenstoffgehalt von 4,2 Gew.-% versetzt. Diese hochviskose Masse wurde anschließend mit 141 g des oben genannten Polydimethylsiloxans verdünnt. Durch Kneten unter Vakuum (10 mbar) bei 150°C wurden innerhalb einer Stunde flüchtige Bestandteile entfernt. Nach dem Abkühlen auf Raumtemperatur wurden 143 g Talkum HB-M 45 hinzugefügt. Die Vernetzung der beschriebenen Masse erfolgte nach Zugabe der in Beispiel 1 beschriebenen Mengen an Ethinylcyclohexanol, SiH-Vernetzer und Pt-Katalysator.

### Beispiel 22:

Im Unterschied zu Beispiel 21 wurden zu der in Beispiel 21 beschriebenen Masse 0,28 g des in Beispiel 15 beschriebenen aminopropylterminierten Polydimethylsiloxans hinzugefügt und anschließend die Masse wie in Beispiel 1 beschrieben vernetzt.

### Beispiel 23:

Im Unterschied zu Beispiel 22 wurden 0,56 g des in Beispiel 15 beschriebenen aminopropylterminierten Polydimethylsiloxans hinzugefügt.

### Beispiel 24:

Im Unterschied zu Beispiel 22 wurden 2,8 g des in Beispiel 15 beschriebenen aminopropylterminierten Polydimethylsiloxans hinzugefügt.

**Tabelle 3: Einfluss von aminopropylterminiertem Polydimethylsiloxan auf den Gewichtsverlust, die Zyklenbildung und den Härteanstieg Talkum-haltiger Siliconelastomere bei 200°C.**

| | Gehalt an aminopropylterminiertem Polydimethylsiloxan [Gew.-%] | Gewichtsverlust der Siliconelastomere innerhalb von 24 Stunden bei 200°C [Gew.-%] | Bildung flüchtiger Siloxanzyklen innerhalb von 24 h bei 200°C [Gew.-%] | Härteanstieg der Siliconelastomerfolie innerhalb von 14 d bei 200°C [Δ Shore A] |
|---|---|---|---|---|
| Beispiel 21 * | 0 | 4,2 | 3,6 | 14 |
| Beispiel 22 | 0,05 | 1,7 | 0,9 | 10 |
| Beispiel 23 | 0,10 | 1,1 | <0,5 | 6 |
| Beispiel 24 | 0,50 | 1,1 | <0,5 | 6 |

| | | | | |
|---|---|---|---|---|
| * nicht erfindungsgemäß | | | | |

Aus Tabelle 3 ist ersichtlich, dass durch Zugabe von aminopropylterminiertem Polydimethylsiloxan zu Talkum-haltigen Siliconelastomeren die Bildung von Siloxanzyklen bei 200°C reduziert bzw. verhindert und damit der Anstieg der Härte deutlich verringert wird.

### Beispiel 25 (nicht erfindungsgemäß):

Im Unterschied zu Beispiel 21 wurde eine vinyldimethylsiloxy- und trimethylsiloxy funktionalisierte pyrogene Kieselsäure verwendet. Außerdem wurde der Masse 24,0 g des in Beispiel 1 beschriebenen SiH-Vernetzers hinzugefügt. Als weiteren Bestandteil wurden in die zu vernetzende Masse an der Walze 2,8 g Calciumhydroxid eingearbeitet. Die Masse wurde wie in Beispiel 1 beschrieben vernetzt.

### Beispiel 26:

Im Unterschied zu Beispiel 25 wurden 0,56 g des in Beispiel 15 beschriebenen aminopropylterminierten Polydimethylsiloxans hinzugefügt.

**Tabelle 4: Einfluss von aminopropylterminiertem Polydimethylsiloxan auf die Ölbeständigkeit.**

| | Beispiel 25* | Beispiel 26 |
|---|---|---|
| Gehalt an aminopropyl-terminiertem Polydimethylsiloxan [Gew.-%] | 0 | 0,1 |
| Härte [Shore A] | 69 | 69 |
| Reißfestigkeit [N/mm²] | 6,6 | 6,7 |
| Reißdehnung [%] | 340 | 335 |

| Nach Öllagerung 70 h/150°C IRM 903 | | |
|---|---|---|
| Härte [Shore A] | 62 | 64 |
| Reißfestigkeit [N/mm²] | 4,4 | 5,7 |
| Reißdehnung [%] | 250 | 255 |
| Gewichtszunahme [Gew.-%] | 22 | 20 |
| Volumenzunahme [Vol.-%] | 32 | 28 |

| | | |
|---|---|---|
| *nicht erfindungsgemäß | | |

Aus Tabelle 4 ist ersichtlich, dass durch Zugabe von aminopropylterminiertem Polydimethylsiloxan zu Talkum-haltigen Siliconelastomeren die Ölbeständigkeit bei 150°C verbessert wird.

### Beispiel 27 (nicht erfindungsgemäß) :

Anstatt des in Beispiel 2 verwendeten Talkums DAB 7 wurde Quarzmehl Sikron SF 600 der Fa. Quarzwerke GmbH eingesetzt. Diese additionsvernetzende Siliconmasse wurde wie in Beispiel 1 beschrieben zu einer Siliconelastomerfolie vernetzt.

### Beispiel 28:

Zu der in Beispiel 27 beschriebenen Masse wurden 0,56 g des in Beispiel 15 beschriebenen aminopropylterminierten Polydimethylsiloxans hinzugefügt. Diese additionsvernetzende Siliconmasse wurde wie in Beispiel 1 beschrieben zu einer Siliconelastomerfolie vernetzt.

### Beispiel 29 (nicht erfindungsgemäß):

Anstatt des in Beispiel 2 verwendeten Talkums DAB 7 wurde Silan-behandeltes Quarzmehl Silbond 600 TST der Fa. Quarzwerke GmbH eingesetzt. Diese additionsvernetzende Siliconmasse wurde wie in Beispiel 1 beschrieben zu einer Siliconelastomerfolie vernetzt.

### Beispiel 30:

Zu der in Beispiel 29 beschriebenen Masse wurden 0,56 g des in Beispiel 15 beschriebenen aminopropylterminierten Polydimethylsiloxans hinzugefügt. Diese additionsvernetzende Siliconmasse wurde wie in Beispiel 1 beschrieben zu einer Siliconelastomerfolie vernetzt.

**Tabelle 5: Einfluss von aminopropylterminiertem Polydimethylsiloxan auf den Gewichtsverlust Quarz-haltiger Siliconelastomere bei 200°C.**

| | Gehalt an aminopropylterminiertem Polydimethylsiloxan [Gew.-%] | Gewichtsverlust der Siliconelastomere innerhalb von 70 Stunden bei 200°C [Gew.-%] |
|---|---|---|
| Beispiel 27* | 0 | 4,1 |
| Beispiel 28 | 0,1 | 1,6 |
| Beispiel 29* | 0 | 4,5 |
| Beispiel 30 | 0,1 | 1,8 |

| | | |
|---|---|---|
| *nicht erfindungsgemäß | | |

Aus Tabelle 5 ist ersichtlich, dass durch Zugabe von aminopropylterminiertem Polydimethylsiloxan zu Quarz-haltigen Siliconelastomeren der Gewichtsverlust deutlich verringert wird.

Die Charakterisierung der Siliconelastomereigenschaften erfolgte gemäß DIN 53505 (Shore A), DIN 53504-S1 (Reißfestigkeit und Reißdehnung). Als Vergleich der Ölbeständigkeit wurden Gewichts- und Volumenzunahme herangezogen (in Öl IRM903 (Motoröl in Anlehnung an Öl ASTM3), das am aggressivsten ist).

## Patentansprüche

1. Zu Elastomeren vernetzbare Siliconmassen, welche die Bestandteile
(A) 20 bis 99 Gew.-% mindestens zwei Alkenylgruppen pro Molekül enthaltendes Polyorganosiloxan mit einer Viskosität bei 25°C von 0,1 bis 500 000 Pa·s,
(B) 1 bis 80 Gew.-% Talkum als nicht-verstärkenden Füllstoff mit einer mittleren Teilchengröße von 0,1 bis 200 µm und einer spezifischen Oberfläche von <100 m²/g,
(C) Vernetzungskomponente die ausgewählt wird aus
(C1) organischem Peroxid und
(C2)mindestens zwei SiH-Funktionen pro Molekül enthaltender Organosiliciumverbindung in Kombination mit Hydrosilylierungskatalysator und
(D) Stickstoffverbindung, die ausgewählt wird aus Amino-, Ammonium-, Amidoverbindungen und stickstoffhaltigen Organosiliciumverbindungen, enthalten.

2. Siliconmassen nach Anspruch 1, bei denen die Zusammensetzung des Alkenylgruppen enthaltenden Polyorganosiloxans (A) der durchschnittlichen allgemeinen Formel (1) entspricht
R¹ₓR²_{y}SiO_{(4-x-y)}/2 (1),
in der
**R**^{**1**} einen einwertigen, gegebenenfalls halogen- oder cyanosubstituierten, gegebenenfalls über eine organische zweiwertige Gruppe an Silicium gebundenen C₁-C₁₀₋Kohlenwasserstoffrest, der aliphatische Kohlenstoff-Kohlenstoff Mehrfachbindungen enthält,
**R**^{**2**} einen einwertigen, gegebenenfalls halogen- oder cyanosubstituierten, über SiC-gebundenen C₁-C₁₀₋Kohlenwasserstoffrest, der frei ist von aliphatischen Kohlenstoff-Kohlenstoff Mehrfachbindungen
**x** eine solche nichtnegative Zahl, daß mindestens zwei Reste **R**^{**1**} in jedem Molekül vorhanden sind, und
**y** eine nicht negative Zahl, so daß **(x+y)** im Bereich von 1,8 bis 2,5 liegt, bedeuten.

3. Additionsvernetzende Siliconmassen nach Anspruch 1 bis 2, bei denen die mindestens zwei SiH-Funktionen pro Molekül enthaltende Organosiliciumverbindung (C2) eine Zusammensetzung der durchschnittlichen allgemeinen Formel (4) besitzt
HₐR³_{b}SiO_{(4-a-b)/2} (4),
in der
**R**^{**3**} einen einwertigen, gegebenenfalls halogen- oder cyanosubstituierten, über SiC-gebundenen C₁-C₁₈₋Kohlenwasserstoffrest, der frei ist von aliphatischen Kohlenstoff-Kohlenstoff Mehrfachbindungen und
**a** und **b** nichtnegative ganze Zahlen sind, mit der Maßgabe, dass 0.5<**(a+b)**<3,0 und 0<**a**<2, und dass mindestens zwei siliciumgebundene Wasserstoffatome pro Molekül vorhanden sind.

4. Siliconmassen nach Anspruch 1 bis 3, bei denen die Stickstoffverbindung (D) ausgewählt wird aus stickstoffhaltigen Silanen, Siloxanen, Silazanen.

5. Siliconelastomere, erhältlich durch Vernetzen der Siliconmassen gemäß Anspruch 1 bis 4.

6. Verwendung von (D) Stickstoffverbindung, die ausgewählt wird aus Amino-, Ammonium-, Amidoverbindungen und stickstoffhaltigen Organosiliciumverbindungen, zur Verbesserung der Hitzestabilität von Elastomeren die erhalten werden durch Vernetzen von Siliconmassen, welche die Bestandteile
(A) 20 bis 99 Gew.-% mindestens zwei Alkenylgruppen pro Molekül enthaltendes Polyorganosiloxan mit einer Viskosität bei 25°C von 0,1 bis 500 000 Pa·s,
(B) 1 bis 80 Gew.-% nicht-verstärkenden Füllstoff mit einer mittleren Teilchengröße von 0,1 bis 200 µm und einer spezifischen Oberfläche von <100 m²/g und
(C) Vernetzungskomponente die ausgewählt wird aus
(C1) organischem Peroxid und
(C2) mindestens zwei SiH-Funktionen pro Molekül enthaltender Organosiliciumverbindung in Kombination mit Hydrosilylierungskatalysator, enthalten.

## Claims

1. Silicone compositions which can be crosslinked to give elastomers and which comprise the constituents
(A) from 20 to 99% by weight of a polyorganosiloxane containing at least two alkenyl groups per molecule and having a viscosity at 25°C of from 0.1 to 500,000 Pa·s,
(B) from 1 to 80% by weight of talc as a non-reinforcing filler having a mean particle size of from 0.1 to 200 µm and a specific surface area of < 100 m²/g,
(C) a crosslinking component selected from
(C1) an organic peroxide and
(C2) an organosilicon compound containing at least two SiH functions per molecule in combination with a hydrosilylation catalyst, and
(D) a nitrogen compound which is selected from amino, ammonium and amido compounds and nitrogen-containing organosilicon compounds.

2. Silicone compositions according to Claim 1, in which the composition of the polyorganosiloxane (A) containing alkenyl groups conforms to the average general formula (1)
R¹ₓR²_{y}SiO_{(4-x-y)/2} (1),
in which
**R**^{**1**} is a monovalent, optionally halogen- or cyano-substituted C₁-C₁₀-hydrocarbon radical containing aliphatic carbon-carbon multiple bonds which is optionally bonded to silicon via a divalent organic group,
**R**^{**2**} is a monovalent, optionally halogen- or cyano-substituted C₁-C₁₀-hydrocarbon radical containing no aliphatic carbon-carbon multiple bonds which is bonded via SiC,
**x** is a non-negative number such that at least two radicals **R**^{**1**} are present in each molecule, and
**y** is a non-negative number such that **(x+y)** is in the range from 1.8 to 2.5.

3. Addition-crosslinking silicone compositions according to Claims 1 to 2, in which the organosilicon compound (C2) containing at least two SiH functions per molecule has a composition of the average general formula (4)
HₐR³_{b}SiO_{(4-a-b)/2} (4),
in which
**R**^{**3**} is a monovalent, optionally halogen- or cyano-substituted C₁-C₁₈-hydrocarbon radical containing no aliphatic carbon-carbon multiple bonds which is bonded via SiC, and
**a** and **b** are non-negative integers,
with the proviso that 0.5 < **(a+b)** < 3.0 and 0 < **a** < 2, and that at least two silicon-bonded hydrogen atoms are present per molecule.

4. Silicone compositions according to Claims 1 to 3, in which the nitrogen compound (D) is selected from nitrogen-containing silanes, siloxanes and silazanes.

5. Silicone elastomers obtainable by crosslinking the silicone compositions according to Claims 1 to 4.

6. Use of (D) a nitrogen compound which is selected from amino, ammonium and amido compounds and nitrogen-containing organosilicon compounds for improving the heat stability of elastomers obtained by crosslinking silicone compositions which comprise the constituents
(A) from 20 to 99% by weight of a polyorganosiloxane containing at least two alkenyl groups per molecule and having a viscosity at 25°C of from 0.1 to 500,000 Pa·s,
(B) from 1 to 80% by weight of a non-reinforcing filler having a mean particle size of from 0.1 to 200 µm and a specific surface area of < 100 m²/g,
(C) a crosslinking component selected from
(C1) an organic peroxide and
(C2) an organosilicon compound containing at least two SiH functions per molecule in combination with a hydrosilylation catalyst.

## Revendications

1. Masses de silicone réticulables en élastomères, qui contiennent les constituants
(A) 20 à 99% en poids d'un polyorganosiloxane contenant au moins deux groupes alcényle par molécule, présentant une viscosité à 25°C de 0,1 à 500 000 Pa.s,
(B) 1 à 80% en poids de talc comme charge non renforçante présentant une grosseur moyenne des particules de 0,1 à 200 µm et une surface spécifique <100 m²/g,
(C) un composant de réticulation, choisi parmi
(C1) un peroxyde organique et
(C2) un composé organosilicié contenant au moins deux fonctions SiH par molécule en combinaison avec un catalyseur d'hydrosilylation et
(D) un composé azoté qui est choisi parmi les composés amino, ammonium, amido et les composés organosiliciés contenant de l'azote.

2. Masses de silicone selon la revendication 1, dans lesquelles la composition du polyorganosiloxane (A) contenant des groupes alcényle correspond à la formule générale moyenne (1)
R¹ₓR²_{y}SiO_{(4-x-y)/2} (1),
dans laquelle
R¹ signifie un radical hydrocarboné en C₁ à C₁₀ monovalent, le cas échéant substitué par halogène ou cyano, le cas échéant lié au silicium via un groupe organique divalent, qui contient des liaisons multiples aliphatiques carbone-carbone,
R² signifie un radical hydrocarboné en C₁ à C₁₀ monovalent, le cas échéant substitué par halogène ou cyano, lié via SiC, qui est exempt de liaisons multiples aliphatiques carbone-carbone
x signifie un nombre non négatif tel qu'il existe au moins deux radicaux R¹ dans chaque molécule, et
y signifie un nombre non négatif tel que (x+y) se situe dans la plage de 1,8 à 2,5.

3. Masses de silicone réticulant par addition selon la revendication 1 à 2, dans lesquelles le composé organosilicié (C2) contenant au moins deux fonctions SiH par molécule présente une composition de formule générale moyenne (4)
HₐR³_{b}SiO_{(4-a-b)/2} (4),
dans laquelle
R³ représente un radical hydrocarbure en C₁ à C₁₈, monovalent, le cas échéant substitué par halogène ou cyano, lié via SiC, qui est exempt de liaisons multiples aliphatiques carbone-carbone et
a et b représentent des nombres entiers non négatifs à condition que 0,5<(a+b)<3,0 et 0<a<2, et qu'il existe au moins deux atomes d'hydrogène liés par du silicium par molécule.

4. Masses de silicone selon la revendication 1 à 3, dans lesquelles le composé azoté (D) est choisi parmi les silanes, les siloxanes et les silazanes contenant de l'azote.

5. Elastomères de silicone, pouvant être obtenus par réticulation des masses de silicone selon la revendication 1 à 4.

6. Utilisation du composé azoté (D) qui est choisi parmi les composés amino, ammonium, amido et les composés organosiliciés contenant de l'azote, pour améliorer la stabilité à la chaleur d'élastomères qui sont obtenus par la réticulation de masses siliconées qui contiennent les constituants
(A) 20 à 99% en poids de polyorganosiloxane contenant au moins deux groupes alcényle par molécule, présentant une viscosité à 25°C de 0,1 à 500 000 Pa.s,
(B) 1 à 80% en poids de charge non renforçante présentant une grosseur moyenne des particules de 0,1 à 200 µm et une surface spécifique de <100 m²/g et
(C) un composant de réticulation choisi parmi
(C1) un peroxyde organique et
(C2) un composé organosilicié contenant au moins deux fonctions SiH par molécule en combinaison avec un catalyseur d'hydrosilylation.
